# EUROPÄISCHE PATENTANMELDUNG

(11) **EP 1 351 368 A1**
(43) Veröffentlichungstag der Anmeldung: **08.10.2003**
(21) Anmeldenummer: 03007661.6
(22) Anmeldetag: 03.04.2003
(51) Int. Cl.: H02K 5/14, H02K 11/04

(54) **Elektromotor mit einem in das Getriebegehäuse integrierten Bürstenhalter**

(30) Priorität: 04.04.2002 DE 10214926
(71) Anmelder: Webasto Vehicle Systems International GmbH, 82131 Stockdorf (DE)
(72) Erfinder: Kraus, Thomas, 86916 Kaufering (DE); Meier, Bernhard, 85551 Kirchheim (DE)
(74) Vertreter: Bedenbecker, Markus

(57) **Zusammenfassung**

Bei einer Antriebsvorrichtung, insbesondere zum Verstellen eines Schiebedachs eines Fahrzeugs, mit einem einen Anker, eine Polwelle und ein Bürstensystem umfassenden Elektromotor, einem von dem Elektromotor angetriebenen Getriebe und einer Schaltungsanordnung zum Ansteuern des Elektromotors, wobei der Elektromotor in einem Motorgehäuse untergebracht ist und das Getriebe sowie mindestens Teile der Schaltungsanordnung in einem mit dem Motorgehäuse verbundenen Getriebegehäuse untergebracht sind, ist das Bürstensystem unabhängig von der Schaltungsanordnung und ohne Zwischenschaltung zusätzlicher Abstützelemente unmittelbar in dem Getriebegehäuse untergebracht.

## Beschreibung

Die vorliegende Erfindung betrifft eine Antriebsvorrichtung, insbesondere zum Verstellen eines Schiebedachs eines Fahrzeugs, mit einem einen Anker, eine Polwelle und ein Bürstensystem umfassenden Elektromotor, einem von dem Elektromotor angetriebenen Getriebe und einer Schaltungsanordnung zum Ansteuern des Elektromotors, wobei der Elektromotor in einem Motorgehäuse untergebracht ist und das Getriebe sowie mindestens Teile der Schaltungsanordnung in einem mit dem Motorgehäuse verbundenen Getriebegehäuse untergebracht sind.

Eine derartige Antriebsvorrichtung ist aus der DE-OS 100 06 320 bekannt. Bei dieser Antriebsvorrichtung ist das Getriebe in einem Getriebegehäuse untergebracht, welches einen Getriebegehäusebereich und einen Schaltungsgehäusebereich aufweist, wobei in einer Seitenwand des Schaltungsgehäusebereichs ein Durchbruch vorgesehen ist, durch welchen bei der Montage der Antriebsvorrichtung die Polwelle des Elektromotors eingeführt wird. Das Bürstensystem ist in einer Bürstenbrücke untergebracht, die als ein umlaufender Kunststoffring ausgebildet ist, der an seiner Oberseite als Einpresskontakte ausgebildete Kontaktierungselemente aufweist, um das Bürstensystem mit der Schaltungsanordnung zu kontaktieren.

Eine Antriebsvorrichtung der eingangs genannten Art ist außerdem auch aus der DE-OS 198 05 185 bekannt. Bei dieser Antriebsvorrichtung ist das Bürstensystem auf einem Bürstenträger montiert, auf dem neben Bürstenköchern auch Entstördrosseln angeordnet sind.

Ferner ist aus der DE-OS 100 18 230 eine Antriebsvorrichtung der eingangs genannten Art bekannt, bei welcher das Bürstensystem einen Bürstenträger zur Aufnahme von Bürsten sowie eine Kontaktierung für den elektrischen Kontakt mit einer Motorelektronik aufweist. Der Bürstenträger ist hierbei ein die Polwelle umgebendes Teil, welches innerhalb des Motorgehäuses angeordnet ist.

Nachteilig bei den obigen Antriebsvorrichtungen ist, dass für das Bürstensystem eigene Haltevorrichtungen vorgesehen sein müssen, die einerseits einen zusätzlichen Teile- und damit Kostenaufwand bedeuten, die andererseits aber auch relativ viel Bauraum beanspruchen.

Schließlich ist aus der DE-OS 42 33 156 eine Antriebsvorrichtung der eingangs genannten Art bekannt, bei welcher zur Drehzahl- und Drehrichtungserfassung des Elektromotors nahe der Polwelle Hall-Sensoren vorgesehen sind, die auf einer Platine angeordnet sind, die so ausgerichtet ist, dass die Polwelle senkrecht zu der Platine verläuft. Bei dieser Antriebsvorrichtung ist das Bürstensystem auf der von den Hall-Sensoren abgekehrten Seite der Platine angeordnet. Nachteilig bei dieser Lösung ist, dass für eine exakte Positionierung der einzelnen Bauteile enge Toleranzen eingehalten werden müssen, da sich die Platzierung der Hall-Sensoren gegenüber der Platine, die Platzierung des Bürstensystems auf der Platine sowie die Platzierung der Platine innerhalb des Getriebegehäuses wechselseitig beeinflussen.

Es ist eine Aufgabe der vorliegenden Erfindung, eine Antriebsvorrichtung der eingangs genannten Art bereitzustellen, bei welcher sich die einzelnen Komponenten, und insbesondere das Bürstensystem für den Elektromotor in einfacher Weise bei geringem Herstellungs- und Montageaufwand bereitstellen und zusammenfügen lassen.

Diese Aufgabe wird bei einer Antriebsvorrichtung der eingangs genannten Art dadurch gelöst, dass das Bürstensystem unabhängig von der Schaltungsanordnung und ohne Zwischenschaltung zusätzlicher Abstützelemente unmittelbar in dem Getriebegehäuse untergebracht ist. Abstützelemente, wie sie aus dem Stand der Technik bekannt sind, z.B. separate Bürstengehäuse oder Bürstenhalter, erübrigen sich, wenn wie nach der vorliegenden Erfindung das Bürstensystem unmittelbar im Getriebegehäuse, beispielsweise in hierfür vorgesehenen, einstückig mit dem Getriebegehäuse ausgebildeten Aufnahmen untergebracht wird. Bei einer solchen Ausgestaltung der Antriebsvorrichtung ist die Positionierung des Bürstensystems unabhängig von der Positionierung der Schaltungsanordnung, die dadurch ohne Einhaltung enger Toleranzen in dem Getriebegehäuse platziert werden kann.

Bevorzugte Ausführungsbeispiele der vorliegenden Erfindung ergeben sich aus den Unteransprüchen.

Insbesondere kann das Bürstensystem mindestens zwei Bürstenköcher umfassen und das Getriebegehäuse eine Aufnahme für jeden der Bürstenköcher aufweisen. Hierbei sind die Aufnahmen und die Bürstenköcher vorzugsweise so gestaltet, dass sie mittels Presspassung miteinander verbunden werden können. Die Montage der Antriebsvorrichtung gestaltet sich dann äußerst einfach, da das Bürstensystem nach der durch die Verbindung von Motorgehäuse und Getriebegehäuse erfolgten Montage des Elektromotors einfach in die in dem Getriebegehäuse vorgesehenen Aufnahmen eingepresst werden müssen.

Ein Ausführungsbeispiel der vorliegenden Erfindung wird nachstehend unter Bezugnahme auf die beiliegenden Bezeichnungen näher erläutert. Es zeigen:
Fig. 1 eine perspektivische Ansicht einer Antriebsvorrichtung nach der vorliegenden Erfindung bei geöffnetem Getriebegehäuse;
Fig. 2 eine Aufsicht auf die Antriebsvorrichtung aus Fig. 1; und
Fig.3 eine perspektivische Darstellung, welche die Montage der Antriebsvorrichtung gemäß den Figuren 1 und 2 veranschaulicht.

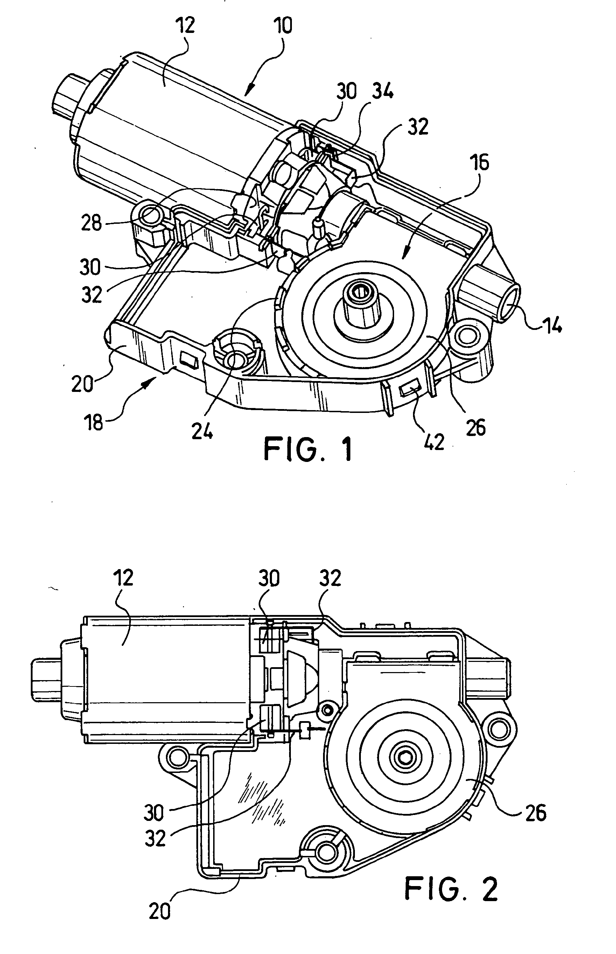

In Fig. 1 ist ein Elektromotor 10 dargestellt, der einen in den Figuren nicht dargestellten Anker aufweist, der von einem Poltopf 12, der gleichzeitig das Motorgehäuse bildet, umgeben ist. Die vom Elektromotor erzeugte Kraft wird über eine Polwelle 14 an ein Getriebe abgegeben, welches ein Schneckenrad 16 aufweist, das mit einer im vorderen Bereich der Polwelle 14 ausgebildeten Schneckenwelle kämmt. Die Schneckenwelle kann hierbei mit der Polwelle verbunden sein oder einstückig mit der Motor- bzw. Polwelle 14 ausgebildet sein. Das so gebildete Untersetzungsgetriebe dient zum Antrieb eines verstellbaren Fahrzeugteils, beispielsweise eines Deckelelements eines öffnungsfähigen Fahrzeugdaches, z.B. des Deckels eines Schiebe- oder Schiebehebedaches oder einer Lamelle bzw. eines Lamellenverbunds eines Lamellendaches.

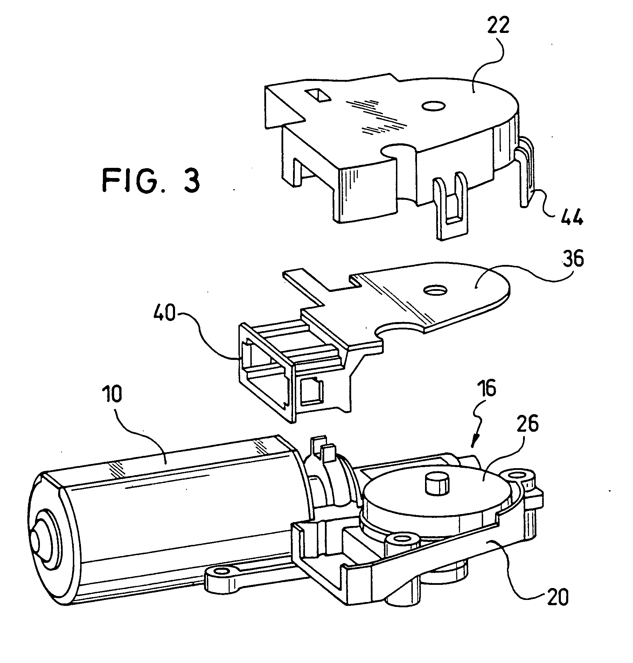

Das Getriebe ist hierbei in einem Getriebegehäuse 18 untergebracht, welches, wie insbesondere aus Fig. 3 hervorgeht, einen unteren Trägerbereich 20 sowie einen Gehäusedeckel 22 umfasst, die vorzugsweise aus Kunststoff gefertigt sind. Der Träger 20 bildet mit einem Teil seiner Bodenplatte sowie einer Wandung 24 einen Getriebegehäusebereich, in dem das Schneckenrad 16 angeordnet ist. Der Getriebegehäusebereich sowie der in Kämmeingriff mit dem Schneckenrad stehende Abschnitt der Motorwelle ist von einem Deckel 26 verschlossen, so dass kein in dem Getriebegehäusebereich vorhandenes Schmiermittel aus diesem Bereich in den Rest des Getriebegehäuses austreten kann.

Zu beiden Seiten der Polwelle weist der Träger 20 des Getriebegehäuses Aufnahmen 28 auf, in welche Bürstenköcher 30 eingeführt sind. Die Bürstenköcher wiederum enthalten in an sich bekannter Weise Schleifkontakte, insbesondere Kohlekontakte, die über Andruckfedern gegen die Polwelle gedrückt werden. Um die Schleifkontakte mit der Schaltungsanordnung zum Ansteuern des Motors zu verbinden, umfassen die Bürstenköcher ferner Kontaktfahnen 32, die aus den Aufnahmen des Getriebegehäuses herausgeführt sind und in Aussparungen 34 desselben sitzen. Die in den Figuren nicht näher dargestellte Schaltungsanordnung zum Ansteuern des Elektromotors ist auf einer Platine 36 angeordnet, die bei der Montage der Antriebsvorrichtung gemäß Fig.3 in dem Getriebegehäuse 18 so angeordnet wird, dass sie das Schneckenrad überdeckt. Auf der Platine 36, in Fig. 3 nicht dargestellte Steckkontakte sorgen hierbei für eine Verbindung der Schaltungsplatine mit dem Bürstensystem über die Kontakte 32. Der Anschluss der Antriebsvorrichtung an das Bordnetz des Fahrzeugs erfolgt dann über einen Steckkontakt, wie er in Fig. 3 bei 40 angedeutet ist.

Wie aus den Figuren ersichtlich ist, gestaltet sich der Aufbau und die Montage der erfindungsgemäßen Antriebsvorrichtung äußerst einfach. Insbesondere wird der Motor mit der Polwelle in die hierfür vorgesehene Aufnahme des Getriebegehäuses eingeführt und mit dem Getriebegehäuse verbunden. Dann wird das Schneckenrad in den Getriebegehäusebereich eingesetzt und mittels des Deckels 16 der Getriebegehäusebereich verschlossen. Sodann werden die Bürstenköcher in die Aufnahmen 28 eingesetzt und dort vorzugsweise mittels Presspassung fixiert. Die Platine 36, welche die Schaltungsanordnung zum Ansteuern des Elektromotors trägt, kann entweder direkt in das Getriebegehäuse eingesetzt werden, oder aber vorerst mit dem Gehäusedeckel 22 verrastet und dann gemeinsam mit dem Gehäusedeckel auf den Träger 20 aufgesetzt werden. Die Fixierung des Deckels 22 an dem Träger 20 erfolgt hierbei vorzugsweise über Rastverbindungen, beispielsweise an dem Träger 20 angebrachte Rastvorsprünge 42 (Fig. 1), die mit entsprechenden Rastausnehmungen 44 an dem Deckel 22 (Fig. 4) verrasten.

Mit der hier beschriebenen Antriebsvorrichtung, die insbesondere zum Verstellen von beweglichen Dachelementen eines Fahrzeugs eingesetzt werden kann, wurde eine Antriebsvorrichtung geschaffen, deren Komponenten sich schnell und einfach montieren lassen und bei der dennoch für eine exakte Positionierung der Teile gegeneinander gesorgt ist. Insbesondere legt das Getriebegehäuse die Anordnung der Bauteile fest, da sich die Positionierung des Getriebes, des Motors und des Bürstensystems sowie der Kontakte zum Kontaktieren des Motors (über das Bürstensystem) alle aus den in dem Getriebegehäuse, insbesondere dem Träger, hierfür vorgesehenen Halterungen für diese Komponenten ergeben.

### Bezugszeichenliste

- 10: Elektromotor
- 12: Poltopf
- 14: Polwelle
- 16: Schneckenrad
- 18: Getriebegehäuse
- 20: Träger
- 22: Gehäusedeckel
- 24: Wandung des Getriebegehäusebereichs
- 26: Deckel des Getriebegehäusebereichs
- 28: Aufnahme
- 30: Bürstenköcher
- 32: Kontaktfahnen
- 34: Aussparung in 28
- 36: Platine
- 40: Steckkontakt
- 42, 44: Rastverbindung

## Patentansprüche

1. Antriebsvorrichtung, insbesondere zum Verstellen eines Schiebedachs eines Fahrzeugs, mit einem einen Anker, eine Polwelle (14) und ein Bürstensystem (30) umfassenden Elektromotor (10), einem von dem Elektromotor angetriebenen Getriebe (16) und einer Schaltungsanordnung (36) zum Ansteuern des Elektromotors, wobei der Elektromotor in einem Motorgehäuse untergebracht ist und das Getriebe sowie mindestens Teile der Schaltungsanordnung in einem mit dem Motorgehäuse verbundenen Getriebegehäuse untergebracht sind, **dadurch gekennzeichnet, dass** das Bürstensystem (30) unabhängig von der Schaltungsanordnung und ohne Zwischenschaltung zusätzlicher Abstützelemente unmittelbar in dem Getriebegehäuse untergebracht ist.

2. Antriebsvorrichtung nach Anspruch 1, **dadurch gekennzeichnet, dass** das Bürstensystem mindestens zwei Bürstenköcher (30) umfasst und das Getriebegehäuse eine Aufnahme (28) für jeden der Bürstenköcher aufweist.

3. Antriebsvorrichtung nach Anspruch 2, **dadurch gekennzeichnet, dass** die Aufnahmen (28) im wesentlichen senkrecht zu der die Polwelle (14) und das Getriebe (16) enthaltenden Ebene angeordnet sind.

4. Antriebsvorrichtung nach Anspruch 2 oder 3, **dadurch gekennzeichnet, dass** die Aufnahmen (28) und die Bürstenköcher (30) so gestaltet sind, dass sie mittels Presspassung miteinander verbunden werden können.

5. Antriebsvorrichtung nach einem der Ansprüche 2 bis 4, **dadurch gekennzeichnet, dass** die Aufnahmen (28) für die Bürstenköcher (30) Aussparungen (34) zur Aufnahme von Kontakten (32) zur Kontaktierung des Bürstensystems mit der Schaltungsanordnung (36) aufweisen.

6. Antriebsvorrichtung nach einem der vorhergehenden Ansprüche, **dadurch gekennzeichnet, dass** das Getriebegehäuse aus Kunststoff gefertigt ist.

7. Antriebsvorrichtung nach einem der vorhergehenden Ansprüche, **dadurch gekennzeichnet, dass** das Motorgehäuse von dem Poltopf (12) des Elektromotors (10) gebildet wird.

8. Antriebsvorrichtung nach einem der vorhergehenden Ansprüche, **dadurch gekennzeichnet, dass** das Getriebegehäuse einen das Getriebe (16) und die Polwelle (12) umgebenden Getriebegehäusebereich und einen das Bürstensystem (30) und die Schaltungsanordnung (36) aufnehmenden Schaltungsgehäusebereich aufweist.

9. Antriebsvorrichtung nach Anspruch 8, **dadurch gekennzeichnet, dass** das Getriebegehäuse im wesentlichen aus einem Träger (20), der den Getriebegehäusebereich umfasst und das Bürstensystem (30) aufnimmt, und einem Gehäusedeckel (22) besteht.

10. Antriebsvorrichtung nach Anspruch 8 oder 9, **dadurch gekennzeichnet, dass** der Getriebegehäusebereich und der Schaltungsgehäusebereich mittels einer den Getriebegehäusebereich verschließenden Deckplatte (26) voneinander getrennt sind.

11. Antriebsvorrichtung nach einem der vorhergehenden Ansprüche, **dadurch gekennzeichnet, dass** das Getriebe ein Schneckenrad (16) aufweist und mindestens Teile der Schaltungsanordnung auf einer Platine (36) montiert sind, die im wesentlichen senkrecht zu der Achse des Schneckenrads ausgerichtet ist.

12. Antriebsvorrichtung nach Anspruch 11, **dadurch gekennzeichnet, dass** die Schaltungsanordnung (36) zumindest teilweise innerhalb der Kontur des Schneckenrades (16) angeordnet ist.
